# EUROPÄISCHE PATENTSCHRIFT

(11) **EP 1 380 763 B1**
(45) Veröffentlichungstag und Bekanntmachung des Hinweises auf die Patenterteilung: **28.09.2005**
(21) Anmeldenummer: 03011281.7
(22) Anmeldetag: 17.05.2003
(51) Int. Cl.: F16D 1/09, F16D 7/02, F16D 43/21

(54) **Welle-Nabeverbindung**
Shaft-hub connection
Connexion arbre-moyeu

(30) Priorität: 12.07.2002 DE 10231840
(43) Veröffentlichungstag der Anmeldung: 14.01.2004
(73) Patentinhaber: ATEC-Weiss GmbH & Co. KG, D-48691 Vreden (DE)
(72) Erfinder: Weiss, Rudolf, 48691 Vreden (DE); Millet, Patrice, 48691 Vreden (DE); Scheithauer, Günter, 48691 Vreden (DE)
(74) Vertreter: Cohausz & Florack

(56) Entgegenhaltungen:
- DE-C- 916 370
- DE-U- 7 736 362
- US-A- 3 751 941

## Beschreibung

Die Erfindung betrifft eine Welle-Nabeverbindung mit einem Anschlussflansch und einem an diesem befestigbaren Klemmelement, insbesondere einem Klemmring, mittels dem das dem Anschlussflansch zugeordnete Wellenende unter Zwischenschaltung einer ein Rutschmoment aufnehmenden Buchse kraftschlüssig mit dem Anschlussflansch verbindbar ist.

Eine solche aus der Praxis bekannte Welle-Nabeverbindung dient als Überlastschutz für kurzzeitig auftretende, insbesondere hochfrequente Drehmomentstöße. Auf diese Weise werden die verbundenen Maschinen vor durch die Drehmomentstöße verursachten Überlastschäden geschützt. Dies wird dadurch bewirkt, dass die zwischen Klemmelement und Wellenende angeordnete Buchse ein Rutschmoment aufnehmen kann, welches bewirkt, dass die insbesondere als Bronzebuchse ausgeführte Buchse im Anschlussflansch durchrutschen kann, wobei die Welle und das ihr zugeordnete Nabenelement von diesem Rutschvorgang unberührt bleiben.

Beim Durchrutschen in Folge des Auftretens eines Kurzschlussmomentes tritt i.d.R. ein Abrieb an einer der Gleitflächen der Buchse auf, die dazu sowohl an ihrer innenseitigen Gleitfläche als auch an der außenseitigen Gleitfläche mit einer geeigneten Gleitschicht beschichtet ist. Ein nachteiliger Effekt bei dieser Lösung ist jedoch, dass die Anordnung bei häufig auftretenden Kurzschlussmomenten nur eine geringe Lebensdauer aufweist, weil dann alle Gleitflächen "gefressen" haben.

In der DE-C-916370 ist eine Welle-Nabeverbindung in Form einer Überlastungskupplung offenbart. Die Kupplung besteht aus zwei Kupplungshälften, nämlich aus einer äußeren Buchse und einer darin koaxial angeordneten inneren Buchse. Bei einer Ausführungsform sind die Buchsen durch Keile mit der Welle bzw. der Nabe verbunden. Die innere Buchse weist dabei an ihrer Außenseite drei flache Ringnuten auf, in denen je ein federnder Ring mit Vorspannung eingesetzt ist. Die Ringe sind aus gewelltem Stahlband gebogen, das glatte Randzonen aufweist. Die äußere Buchse sitzt auf den federnden Ringen und ist somit durch Haftkräfte mit der inneren Buchse verbunden. Bei Überschreitung der Haftkräfte verdrehen sich die Buchsen gegeneinander. Die Federkraft der Ringe ist entsprechend der gewünschten Haftreibung gewählt. Bei einer Variante dieser Kupplung sind die beiden Buchsen mit der Nabe und der Welle nicht durch Keile, sondern ebenfalls durch federnde Ringe, die wiederum in flachen Ringnuten der Buchsen eingesetzt sind, verbunden. Die federnden Ringe, die die Nabe bzw. Welle berühren, sind mit so hoher Vorspannung eingepresst, dass bei Überlastung nur die Buchsen aufeinander gleiten können, nicht jedoch die Nabe und die Welle gegenüber den mit ihnen verbundenen Buchsen.

Die US-A-3751941 offenbart eine Sicherheitskupplung zur Begrenzung des übertragenen Drehmomentes. Die Kupplung weist einen äußeren ringförmigen Metallreibungskörper und einen inneren Reibungskörper auf, der als stählerne Ringnabe gestaltet und mit einer Welle drehfest verbunden. Der äußere Reibungskörper ist aus verhältnismäßig dünnen äußeren und inneren koaxialen Rohrteilen gebildet, die mit ihren einander ergänzenden kegelstumpfförmigen Innen- bzw. Außenflächen zusammengreifen. Der äußere Rohrteil ist ein Stahlrohransatz eines radialen Innenabschnittes eines Kettenrades und verläuft zu diesem axial. Der innere Rohrteil besteht aus Bronze und ist mit drei über den Umfang verteilten Schlitzen versehen. Der äußere Reibungskörper besitzt einen höheren Wärmeausdehnungswert als der innere Reibungskörper.

Aus der DE-U-7736362 ist schließlich ein Spannsatz zur Befestigung einer Nabe an einer Welle bekannt, wobei die Nabe einen die Welle umschließenden, geschlossenen zylindrischen Nabenansatz aufweist. Der Spannsatz besteht aus einem auf den zylindrischen Nabenansatz aufgeschobenen dünnwandigen Druckring, der einen selbsthemmendem konischen Außenmantel und einen radialen Bund aufweist, und einem geschlossenen, dickwandigen Außenspannring mit korrespondierender Konusbohrung. Beide Ringe weisen planetenartig angeordnete Gewindebohrungen auf und sind mittels Innensechskantschrauben gegenläufig spannbar.

Der Erfindung liegt davon ausgehend die Aufgabe zugrunde, eine Vorrichtung der eingangs genannten Art dahingehend weiterzuentwickeln, dass die Lebensdauer der Welle-Nabeverbindung erhöht wird.

Diese Aufgabe wird erfindungsgemäß dadurch gelöst, dass bei einer Welle-Nabeverbindung nach dem Oberbegriff des Anspruchs 1 die Buchse in axialer Richtung mehrteilig gestaltet ist.

Die erfindungsgemäße Lösung zeichnet sich dadurch aus, dass nunmehr durch die in axialer Richtung mehrfach geteilte Buchse eine Mehrzahl von Ringen mit jeweils separaten inneren und äußeren Gleitflächen gestaltet worden ist, die eine entsprechende Vielzahl von "Fressvorgängen" in den Gleitflächen zulassen.

Weitere bevorzugte Ausführungsformen gehen aus den Unteransprüchen hervor.

Die Erfindung wird im Folgenden anhand einer Ausführungsbeispiele zeigenden Zeichnung näher erläutert. Dabei zeigen
- Fig. 1: ein erstes Ausführungsbeispiel einer erfindungsgemäßen Welle-Nabeverbindung in der seitlichen Ansicht; und
- Fig. 2: ein zweites Ausführungsbeispiel einer erfindungsgemäßen Welle-Nabeverbindung, ebenfalls in der seitlichen Ansicht.

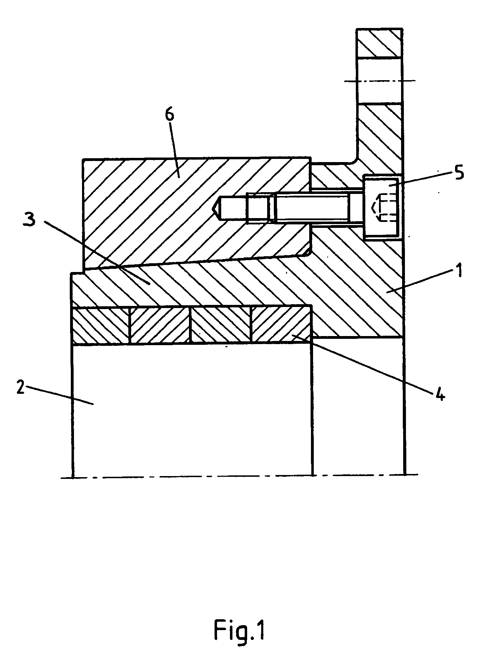

Nach dem in Fig. 1 dargestellten ersten Ausführungsbeispiel beinhaltet die Welle-Nabeverbindung einen Anschlussflansch 1. Es ist nur ein Ausschnitt des Anschlussflansches 1 dargestellt, in dem ein Wellenende 2 mündet.

Der Anschlussflansch 1 ist in der Form eines Nabenelementes ausgebildet, wobei sich ein Teil des Nabenelementes über das Wellenende 2 hinaus erstreckt. Über als Klemmschrauben 5 ausgeführte Anschlussmittel ist ein als Klemmelement dienender Klemmring 6 an dem Anschlusselement 1 befestigt. Durch die kegelförmige Ausbildung des Nabenelementes an seiner dem Klemmring 6 zugewandten Außenfläche wird beim Anzug der Klemmschrauben 5 ein Kraftschluss des Klemmringes 6 gegen das Nabenelement erreicht. Hierzu ist die Oberfläche des Nabenelementes in ihrem kegelförmigen Bereich gefettet.

Zwischen Klemmring 6 und dem Wellenende 2 ist eine aus Bronze ausgebildete Buchse angeordnet, welche aus einer Vielzahl, im Ausführungsbeispiel nach Fig. 1 von vier ringförmigen Buchsenelementen gebildet ist. Die Buchsenelemente sind jeweils auf ihren inneren, dem Wellenende 2 zugeordneten Gleitflächen und auf ihren äußeren, der Innenseite des Nabenelementes des Anschlussflansches 1 zugeordneten Gleitflächen beschichtet. Im Falle eines auftretenden Kurzschlussmomentes in Folge von Überlast kann die Welle 2 mit den Buchsenelementen 4 zwischen der Buchse 4 und der unter Klemmwirkung stehenden Nabe durchrutschen. Hierdurch wird ein "Fressen" der Nabe auf der Welle vermieden. Dabei kann die Höhe des Rutschmomentes, welches im Überlastfall von der Buchse aufzunehmen ist, voreingestellt werden. Die Genauigkeit der Voreinstellung beträgt etwa 10%. Dabei hängt die Streuung des Rutschmomentes ab von der tatsächlichen Toleranz der Welle 2. Durch die geteilte Ausführung der Buchse 4 in Form von mehreren axial benachbart angeordneten Ringen wird erreicht, dass die Buchse selbst dann noch das erforderliche Rutschmoment aufnehmen kann, wenn eine oder mehrere Gleitflächen der Ringe bereits vorgeschädigt sind in Folge zuvor aufgetretener Überlast und dadurch bedingtes "Fressen" der Gleitflächen.

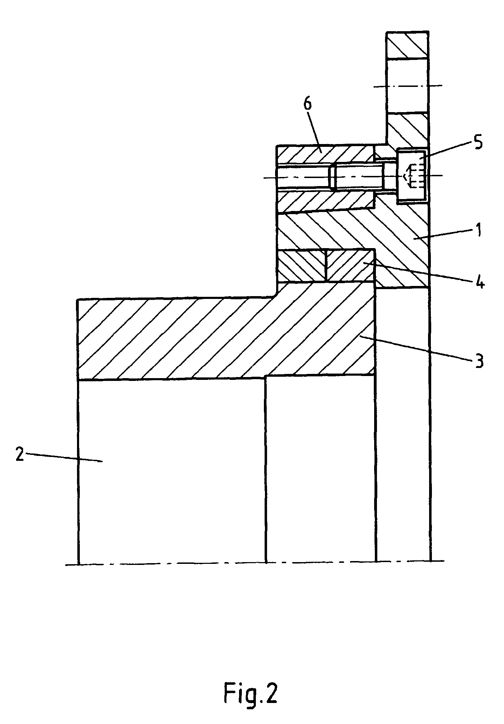

Das in Fig. 2 dargestellte zweite Ausführungsbeispiel der Erfindung unterscheidet sich von dem in Fig. 1 dargestellten ersten Ausführungsbeispiel durch die Gestaltung der Nabe bzw. Hülse in Verbindung mit dem Anschlusselement 1. Dabei ist das Naben-Hülsenelement mehrteilig ausgestaltet, wobei ein erster Nabenteil einstückig mit dem Anschlussflansch 1 ausgebildet ist und sich über die Länge der Buchse 4 erstreckt. Der andere Teil der Nabe ist als hülsenförmiger Nabenkern 3 ausgebildet und dem Wellenende 2 zugeordnet. In diesem Ausführungsbeispiel wirkt die Buchse 4 direkt mit dem Nabenkern 3 zusammen, wobei die Buchse 4 in diesem Ausführungsbeispiel wegen der geringeren Länge nur einfach unterteilt ist und somit aus zwei Ringen besteht. Auch bei dieser Ausführungsform nimmt die Bronzebuchse 4 im Falle des Auftretens eines Kurzschlussmomentes ein Rutschmoment auf, wobei Welle 2 und Nabenkern 3 von diesem Rutschmoment unberührt bleiben und lediglich eine Belastung der äußeren oder inneren Gleitflächen eines der Ringe der Buchse 4 auftritt. Abgesehen von der im Übrigen identischen Funktionsweise mit dem Ausführungsbeispiel nach Fig. 1 zeichnet sich die in Fig. 2 dargestellte Lösung dadurch aus, dass die Genauigkeit des Rutschmomentes auf bis zu +/-5% erhöht werden kann, und zwar hier unabhängig von der tatsächlichen Wellentoleranz.

## Patentansprüche

1. Welle-Nabeverbindung mit einem Anschlussflansch (1) und einem an diesem befestigten Klemmelement, insbesondere einem Klemmring (6), mittels dem das dem Anschlussflansch (1) zugeordnete Wellenende (2) unter Zwischenschaltung einer ein Rutschmoment aufnehmenden Buchse (4) kraftschlüssig mit dem Anschlussflansch (1) verbindbar ist, wobei der Anschlussflansch (1) ein Nabenelement mit einem kegelförmig ausgebildeten Bereich aufweist und die Höhe des von der Buchse (4) aufzunehmenden Rutschmomentes einstellbar ist
**dadurch gekennzeichnet, dass**
die Buchse (4) in axialer Richtung mehrteilig gestaltet ist.

2. Welle-Nabeverbindung nach Anspruch 1,
**dadurch gekennzeichnet, dass**
die Buchse (4) eine Bronzebuchse ist.

3. Welle-Nabeverbindung nach Anspruch 1 oder 2,
**dadurch gekennzeichnet, dass**
die Buchse (4) sowohl auf der inneren als auch auf der äußeren Gleitfläche mit einer Gleitschicht versehen ist.

4. Welle-Nabeverbindung nach einem der Ansprüche 1 bis 3,
**dadurch gekennzeichnet, dass**
dem Wellenende (2) ein Naben-Hülsenelement (3) zugeordnet ist, welches unter der Klemmwirkung des Klemmelementes (6) steht.

5. Welle-Nabeverbindung nach Anspruch 4,
**dadurch gekennzeichnet, dass**
das Naben-Hülsenelement (3) einstückig mit dem Anschlussflansch (1) ausgebildet ist und sich im Wesentlichen über die Länge der Buchse (4) erstreckt.

6. Welle-Nabeverbindung nach den Ansprüchen 1 und 4,
**dadurch gekennzeichnet, dass**
das Naben-Hülsenelement mehrteilig ausgebildet ist, wobei ein Teil einteilig mit dem Anschlussflansch (1) ausgebildet ist und der andere Teil (3) als hülsenförmiger Nabenkern dem Wellenende (2) zugeordnet ist.

## Claims

1. A shaft-hub connection having an attachment flange (1) and a clamping element, particularly a clamping ring (6), attached thereto, by means of which a shaft end (2) assigned to the attachment flange (1) is connectable by frictional connection to the attachment flange (1) with an interposed bushing (4) which receives a slip torque, wherein the attachment flange (1) has a hub element having a conical region, and wherein the level of the slip torque, which is to be taken by the bushing (4), can be adjusted, **characterized in that** the bushing (4) is designed in multiple parts in the axial direction.

2. The shaft-hub connection according to Claim 1, **characterized in that** the bushing (4) is a bronze bushing.

3. The shaft-hub connection according to Claim 1 or 2, **characterized in that** the bushing (4) is provided with a sliding film on its inner and the outer sliding surfaces.

4. The shaft-hub connection according to any of Claims 1 to 3, **characterized in that** a hub-sleeve element (3), which is under the clamping effect of the clamping element (6), is assigned to the shaft end (2).

5. The shaft-hub connection according to Claim 4, **characterized in that** the hub-sleeve element (3) is implemented in one piece with the attachment flange (1) and extends essentially over the length of the bushing (4).

6. The shaft-hub connection according to Claims 1 and 4, **characterized in that** the hub-sleeve element is implemented in multiple parts, one part being implemented in one piece with the attachment flange (1) and the other part (3) being assigned as a sleeve-shaped hub core to the shaft end (2).

## Revendications

1. Connexion arbre-moyeu, avec une bride de raccordement (1) et un élément de serrage (1) fixé sur cette dernière, notamment une bague de serrage (6), à l'aide de laquelle l'extrémité de l'arbre (2) qui est associée à la bride de raccordement (1) est reliable par connexion de friction avec la bride de raccordement (1), sous montage intermédiaire d'un coussinet (4) absorbant un couple de glissement, la bride de raccordement (1) comportant un élément de moyeu avec une zone conçue sous forme conique et la valeur du couple de glissement devant être absorbé par le coussinet (4) étant adjustable,
**caractérisée en ce qu'**en direction axiale, le coussinet (4) est conçu en plusieurs éléments.

2. Connexion arbre-moyeu selon la revendication 1,
**caractérisée en ce que** le coussinet (4) est un coussinet en bronze.

3. Connexion arbre-moyeu selon la revendication 1 ou 2,
**caractérisée en ce qu'**aussi bien sur la face intérieure que sur la face de glissement extérieure, le coussinet (4) est muni d'une couche de glissement.

4. Connexion arbre-moyeu selon l'une quelconque des revendications 1 à 3,
**caractérisée en ce qu'**une douille de moyeu (3) qui est sous l'effet de serrage de l'élément de serrage (6) est associée à l'extrémité de l'arbre.

5. Connexion arbre-moyeu selon la revendication 4,
**caractérisée en ce que** la douille de moyeu (3) est conçue en monobloc avec la bride de raccordement (1) et s'étend sensiblement sur la longueur du coussinet (4).

6. Connexion arbre-moyeu selon les revendications 1 et 4, **caractérisée en ce que** la douille de moyeu est conçue en plusieurs éléments, un élément étant conçu en monobloc avec la bride de raccordement (1) et l'autre élément (3) étant associé à l'extrémité de l'arbre (2) en tant que noyau de moyeu en forme de douille.
